# EUROPÄISCHE PATENTANMELDUNG

(11) **EP 4 607 401 A1**
(43) Veröffentlichungstag der Anmeldung: **27.08.2025**
(21) Anmeldenummer: 25159046.9
(22) Anmeldetag: 20.02.2025
(51) Int. Cl.: G06F 40/109

(54) **COMPUTERPROGRAMM UND COMPUTERIMPLEMENTIERTES VERFAHREN ZUM ANPASSEN EINER GLYPHE, UM EINE ANGEPASSTE GLYPHE IN KLEINEN ABMESSUNGEN SPÄTER DRUCKTECHNISCH AUF EIN SUBSTRAT AUFZUBRINGEN**

(30) Priorität: 26.02.2024 DE 102024105310
(71) Anmelder: Bundesdruckerei GmbH, 10969 Berlin (DE)
(72) Erfinder: Schabacker, Hanno, 10717 Berlin (DE)
(74) Vertreter: Hentrich Patent- & Rechtsanwaltspartnerschaft mbB

(57) **Zusammenfassung**

Die Erfindung betrifft ein Computerimplementiertes Verfahren zum Anpassen einer Glyphe (100), um diese in kleinen Abmessungen in Form einer angepassten Glyphe (102) später drucktechnisch auf ein Substrat aufzubringen, umfassend die Schritte:
- Bereitstellen einer Ursprungsdatei, die die Glyphe (100) enthält;
- Ermitteln von allen Ankerpunkten (104) der Glyphe (100), welche durch einen Kontakt von zwei zumindest abschnittsweise geradlinig verlaufenden Kanten (106) eine Innenecke (108) der Glyphe (100) ausbilden;
- Umgestalten der Glyphe (100) und somit Bilden der angepassten Glyphe (102)
a) durch Versetzen von wenigstens einem der Ankerpunkte (104) weiter in seine Innenecke (108) hinein, wobei die Innenecke (108) zu einer Tintenfalle (110) ausgehöhlt wird; oder
b) durch Einbringen eines bogenförmigen Verlaufs in die beiden sich kontaktierenden Kanten (106) unter Beibehaltung ihres Kontakts, wobei die Innenecke (108) zu einer Tintenfalle (110) ausgehöhlt wird; und

- Speichern der angepassten Glyphe (102) in eine Zieldatei.

Die Erfindung betrifft außerdem ein Computerprogramm mit Programmcode zur Durchführung dieses Verfahrens.

## Beschreibung

Die Erfindung betrifft ein computerimplementiertes Verfahren zum Anpassen einer Glyphe, um diese in kleinen Abmessungen in Form einer angepassten Glyphe später drucktechnisch auf ein Substrat aufzubringen. Darüber hinaus betrifft die Erfindung ein Computerprogramm mit Programmcode zur Durchführung aller Verfahrensschritte des Verfahrens.

Methoden und Vorrichtungen zur Substituierung von Schriftarten und zur Anzeige von Zeichen, mithin Verfahren zu einem sogenannten "font morphing", sind beispielsweise aus der EP 0 518 554 A2 bekannt. In der EP 2 410 487 A1 wird ein Verfahren zur automatischen Modifizierung einer Grafikeigenschaft zur Erfüllung einer Auflösungsgrenze angegeben.

Die vorliegende Erfindung beschäftigt sich mit dem Problem, dass bei besonders klein gedruckten Glyphen, beispielsweise bei besonders klein gedruckten Schriftzeichen (mithin sogenanntem Mikrotext), die Eckenbereiche der Glyphen mit Tinte gefüllt werden, sodass anschließend keine deutliche Ecke mehr vorliegt oder erkennbar ist. Auch bei Glyphen, die eine geschlossene Trajektorie umfassen, kann das Problem auftreten, dass der durch die geschlossene Trajektorie gebildete Innenraum mit Drucktinte unerwünscht gefüllt wird.

Das unerwünschte Verfüllen mit Tinte hängt dabei selbstverständlich auch von der Art des gewählten Druckprozesses ab. Die vorliegende Anmeldung geht von einem Druck mit flüssiger Tinte aus. Ein Druck mit flüssiger Tinte erfolgt beispielsweise bei einem Inkjet-Druck (Tintenstrahldruck), einem Siebdruck, oder einem Tampondruck oder dergleichen.

Das unerwünschte Verfüllen mit Tinte hängt dabei selbstverständlich auch von der Art des Substrats ab, das mit der flüssigen Tinte bedruckt wird. Als Substrate kommen beispielsweise papierbasierte Substrate in Betracht. Auch Substrate auf Polymerbasis können Einsatz finden. Das Substrat kann mit einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann der Bedruckstoff, auf den die Tinte aufgebracht wird, auch aus mehreren dieser Materialien hergestellt sein. Bevorzugt besteht das Substrat aus PC, PVC und PET. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus drei bis zwölf, vorzugsweise vier bis zehn Folien, hergestellt. Jedenfalls kann das Substrat mit einer Drucktinte bedruckt werden oder mit einer solchen bedruckt vorliegen.

Unter einer Glyphe die grafische Darstellung eines Schriftzeichens zu verstehen. Es können dabei also Buchstaben, Zahlen, Sonderzeichen und Ligaturen als Glyphe verstanden werden.

Es ist daher die Aufgabe der vorliegenden Erfindung, ein computerimplementiertes Verfahren zum Anpassen einer Glyphe anzugeben, das auch bei einem Druck der Glyphe in sehr kleinen Abmessungen noch immer ein gut lesbares oder sogar maschinenlesbares Druckbild ergibt.

Diese Aufgabe wird durch ein Verfahren mit den Merkmalen des Anspruchs 1 und durch ein Computerprogramm mit den Merkmalen des Anspruchs 15 gelöst. Vorteilhafte Ausgestaltungen mit zweckmäßigen Weiterbildungen der Erfindung sind in den abhängigen Ansprüchen angegeben.

Das erfindungsgemäße computerimplementierte Verfahren zum Anpassen einer Glyphe, um diese in kleineren Abmessungen in Form einer angepassten Glyphe später drucktechnisch auf ein Substrat aufzubringen, umfasst insbesondere die folgenden Schritte:
- Bereitstellen einer Ursprungsdatei, die die Glyphe enthält;
- Ermitteln von allen Ankerpunkten der Glyphe, welche durch einen Kontakt von zwei zumindest abschnittsweise geradlinig verlaufenden Kanten eine Innenecke der Glyphe ausbilden;
- Umgestalten der Glyphe und somit bilden der angepassten Glyphe
   a) durch Versetzen von wenigstens einem der Ankerpunkte weiter in seine Innenecke hinein, wobei die Innenecke zu einer Tintenfalle (englisch "ink trap") ausgehöhlt wird; oder
   b) durch Einbringen eines bogenförmigen Verlaufs in die beiden sich kontaktierenden Kanten unter Beibehaltung ihres Kontakts, wobei die Innenecke zu einer Tintenfalle ausgehöhlt wird; und
- Speichern der angepassten Glyphe in eine Zieldatei.

Auf diese Weise ist es also möglich, eine Glyphe derart zu modifizieren, dass sie auch dann noch (maschinen-)lesbar bleibt, wenn sie mit besonders geringen Abmessungen gedruckt wird. Unter geringen Abmessungen sind beispielsweise Glyphen zu verstehen, die eine Versalhöhe von weniger als 0,5 Millimeter (mm) besitzen. Besonders kleine Abmessungen lassen sich beispielsweise im Hochdruckverfahren realisieren bei Glyphen, die dann mit einer Versalhöhe von 0,4 Millimeter bis 0,3 Millimeter gebildet sind. Im Offsetdruckverfahren lassen sich Versalhöhen der Glyphe von 0,2 Millimeter bis 0,1 Millimeter realisieren. In Abhängigkeit des gewählten Substrats können auch noch kleinere Versalhöhen realisiert werden, beispielsweise wenn auf einem Polymer (z.B. Polyethylen oder Polycarbonat) gedruckt wird.

Bei Glyphen, die in solchen kleinen Abmessungen auf ein Substrat aufgedruckt werden, wird durch das erfindungsgemäße Verfahren gewährleistet, dass diese noch immer (maschinen-)lesbar bleiben und insbesondere deren Innenecken oder Binnenräume nicht mit Tinte verfüllt werden. Damit eignet sich also das computerimplementierte Verfahren besonders gut, um Glyphen anzupassen, die beispielsweise für Mikroschriftzeilen in gedruckten Sicherheitsdokumenten wie Banknoten, Reisepässen, Personalausweisen oder Führerscheinen genutzt werden.

Typischerweise liegt die anzupassende ursprüngliche Glyphe in der Ursprungsdatei als eine vektorbasierte Grafik vor, die Linien und/oder Formen in Form von Pfaden (Trajektorien) umfassen. Ist der Pfad geschlossen, so liegt eine Form vor. Ist der Pfad nicht geschlossen, so liegt eine Linie vor. Zur Bildung der Pfade werden Ankerpunkte genutzt. Sie liegen entweder als Eckpunkte oder als glatte Punkte vor. Die Eckpunkte bilden gerade Linien und auch Ecken (Innenecken oder Außenecken) aus, wobei die glatten Punkte Kurven definieren, die keine Ecke enthalten. Beim Ermitteln der Ankerpunkte werden also automatisiert diejenigen Ecken identifiziert, die für die Umgestaltung der Glyphe notwendig sind.

Unter einer Tintenfalle ist ein ausgesparter Bereich der späteren, angepassten Glyphe zu verstehen, der zwar nicht bedruckt werden soll, der aber beim Druckvorgang aufgrund der Viskosität der Druckertinte und/oder aufgrund der Saugfähigkeit des bedruckten Substrats dennoch verfüllt wird. Dies kommt insbesondere dann zum Tragen, wenn die Glyphe mit besonders kleinen Abmessungen auf das Substrat aufgedruckt wird.

Eine Innenecke wird an einem Punkt der Glyphe gebildet, an welchem sich zwei Kanten(-vektoren) kontaktieren, wobei die Kanten(-vektoren) dabei einen Winkel von zwischen 0 Grad und 180 Grad zwischen sich einschließen.

Demgegenüber wird eine Außenecke an einem Punkt der Glyphe gebildet, an welchem sich zwei Kanten(-vektoren) kontaktieren, wobei die Kanten(-vektoren) dabei unter einem Winkel von zwischen 180 Grad und 360 Grad zueinander ausgerichtet sind.

Beim Versetzen der Ankerpunkte wird der Verlauf der Kanten vorzugsweise abgerundet, was einem verbesserten Druckbild dient. Vorzugsweise ist die Verrundung derart gebildet, dass keine Innenecke im eigentlichen Sinne mehr vorliegt. In diesem Falle liegt dann im Ankerpunkt (Kontaktpunkt der beiden Kanten) ein Winkel von Null Grad zwischen den Kanten vor, die in der ursprünglichen Glyphe die Innenecke gebildet hatten. In diesem Fall wird dann also der ursprünglich als Innenecke (Eckpunkt) gebildete Ankerpunkt zu einem glatten Punkt umgestaltet. Alternativ oder zusätzlich werden dem ermittelten Ankerpunkt weitere Ankerpunkte hinzugefügt, um dann eine ästhetisch ansprechende Verrundung zu erzielen. Es können hier beispielsweise drei weitere Ankerpunkte gesetzt werden, die dann verrundet werden. Es können aber auch mehr als drei weitere Ankerpunkte gesetzt werden (rein beispielhaft aber höchstens fünfzehn). Die (beiden) äußeren Ankerpunkte halten dabei die Position der Ecke fest, wohingegen ein weiterer, mittlerer Ankerpunkt durch die Verschiebung die Tintenfalle ausbildet.

Eine zuverlässige Tintenfalle wird dadurch ausgebildet, dass der Ankerpunkt der Innenecke so versetzt wird, dass seine zugehörige Innenecke einen Öffnungswinkel von zwischen 10 Grad und 45 Grad bereitstellt. Damit führt also dieser Öffnungswinkel über zum Verlauf der Kanten, die die ursprüngliche Innenecke gebildet haben.

Die Innenecke wird im Rahmen des Verfahrens zu einer Tintenfalle ausgehöhlt. Dies bedeutet, dass nach dem Umgestalten kein geradliniger Verlauf der beiden Kanten mehr vorliegt, welche die Innenecke bilden. Hierbei lässt sich dann der "Öffnungswinkel" entnehmen oder vorgeben, welcher dem Winkel zwischen den beiden Tangenten entspricht, die an den Wandverlauf innerhalb der Tintenfalle fiktiv angelegt werden können.

In einer Ausgestaltung des computerimplementierten Verfahrens wird der Ankerpunkt von einer Innenecke der Glyphe, deren Kanten unter einem Winkel von zwischen 70 Grad und 110 Grad zueinander ausgerichtet sind, so versetzt, dass der Öffnungswinkel zwischen 35 Grad und 45 Grad beträgt. Auf diese Weise bleibt die Innenecke auch dann vorhanden, wenn die vektorbasierte Glyphe belichtet wird, mithin gerastert wird.

In einer weiteren Ausgestaltung ist es von Vorteil, wenn der Ankerpunkt der Glyphe von einer Innenecke, deren Kanten unter einem Winkel von zwischen 20 Grad und 60 Grad zueinander ausgerichtet sind, so versetzt wird, dass der Öffnungswinkel zwischen 10 Grad und 20 Grad beträgt. Auch hier bleiben die Tintenfallen nach der Belichtung der Glyphe erhalten, sodass das nachfolgende Bedrucken nicht zu einem Verdrucken der Innenecken führt.

In Abhängigkeit des gewählten Druckverfahrens und in Abhängigkeit der späteren Auflösung für die Belichtung, kann es von Vorteil sein, dass der Öffnungswinkel asymmetrisch in die Innenecke eingebracht wird.

Alternativ oder ergänzend kann auch die Anordnung der Tintenfallen an der angepassten Glyphe asymmetrisch erfolgen, damit ein Steg in der Glyphe dort nicht zu dünn wird; dies wäre nämlich der Fall, wenn eine symmetrische Anordnung der Tintenfallen gewählt werden würde. Es ist mit anderen Worten also die vorteilhafte Möglichkeit gegeben, dass mehrere Innenecken an der Glyphe identifiziert werden und/oder dass mehrere Tintenfallen an der Glyphe ausgebildet werden, wobei die Anordnung der Tintenfallen selbst asymmetrisch erfolgt; insbesondere auch dann, wenn die einzelnen Tintenfallen selbst symmetrisch gebildet sind. Eine stärkere Asymmetrie lässt sich bei asymmetrisch angeordneten Tintenfallen aber zusätzlich durch eine asymmetrische Gestaltung der einzelnen Tintenfallen erzeugen.

Es ist von Vorteil, wenn im Falle einer Außenecke, die an einer der Kanten der Glyphe anliegt, der Ankerpunkt dieser Außenecke so versetzt wird, dass der Ankerpunkt einen, insbesondere in Abhängigkeit der späteren Abmessungen des Drucks, vorgegebenen Abstand von der Kante einnimmt. Auf diese Weise wird vermieden, dass im späteren Druckbild eine verstärkte Tintenansammlung, mithin eine Verdickung, an derjenigen Stelle auftritt, wo die Außenecke an der Kante anliegt.

Um zu vermeiden, dass bei dem Druck der Glyphe Binnenräume mit Tinte verfüllt werden, hat es sich als vorteilhaft erwiesen, wenn im Falle einer Glyphe mit einem von Kanten umschlossenen Binnenraum, mindestens eine der Kanten derart versetzt wird, dass sich der Flächeninhalt des Binnenraums gegenüber dem Flächeninhalt des Binnenraums der ursprünglichen Glyphe erhöht.

Dementsprechend ist es auch von Vorteil, wenn im Falle einer Glyphe mit einem von Kanten nur teilweise umschlossenen Freiraum, zumindest eine der Kanten derart versetzt wird, dass sich der Flächeninhalt des nur teilweise umschlossenen Freiraums gegenüber dem Freiraum der ursprünglichen Glyphe erhöht. Auch hierbei ist gewährleistet, dass der Freiraum nicht von Tinte unerwünscht verfüllt wird. Die spätere angepasste Glyphe bleibt im Druckbild erkennbar, mithin (maschinen-)lesbar.

Es ist die Möglichkeit gegeben, dass die Glyphe mit einem ein freies Ende aufweisenden und sich zwischen zwei Kanten erstreckenden Schenkel gebildet ist. In diesem Fall ist es von Vorteil, wenn an einem dem freien Ende abgewandten gebundenen Ende des Schenkels an höchstens einer der beiden Innenecken eine Tintenfalle gebildet wird. Dies vermeidet, dass der Schenkel an seinem gebundenen Ende an beiden seiner Innenecken mit einer Tintenfalle gebildet wird, womit der Schenkel im späteren Druckbild nicht zu dünn erscheint.

In einer weiteren Ausgestaltung hat es sich als vorteilhaft erwiesen, wenn ein mit einem freien Ende endender Schenkel der Glyphe mit einer senkrecht bezüglich eines Verlaufs des Schenkels orientierten Abschlusskante abschließt. Damit ist gewährleistet, dass zu spitze und zu stumpfe Winkel vermieden werden, wodurch eine bessere Verdruckbarkeit und damit ein besseres Druckbild der gedruckten Glyphe entsteht.

Es ist ferner die Möglichkeit vorhanden, dass die Glyphe aus der Ursprungsdatei ein serifenloses Schriftzeichen ist, welches in eine angepasste Glyphe in Form eines serifenbetonten Schriftzeichens umgestaltet wird. Dies erhöht die (Maschinen-)Lesbarkeit der dann später gedruckten Glyphe, die mit geringen Abmessungen, insbesondere von weniger als 0,5 mm Versalhöhe, verdruckt wird. Im Hochdruckverfahren werden die Glyphen mit einer Versalhöhe von höchstens 0,4 Millimeter gedruckt. Im Offsetdruckverfahren werden die Glyphen mit einer Versalhöhe von höchstens 0,25 Millimeter gedruckt. In Abhängigkeit des gewählten Bedruckstoffs können auch noch kleinere Versalhöhen realisiert werden.

Für ein zuverlässiges Druckbild hat es sich als vorteilhaft erwiesen, wenn eine vektorbasierte Zieldatei anschließend einem Rastergrafikprozessor (RIP für "raster image processor") zugeführt wird, welcher zumindest die angepasste Glyphe in eine Rastergrafik umrechnet, um diese anschließend drucken zu können.

Es ist aber auch die Möglichkeit vorhanden, dass das computerimplementierte Verfahren durch den Rastergrafikprozessor selbst durchgeführt wird. In diesem Fall wird die bereitgestellte vektorbasierte Ursprungsdatei dann dem Rastergrafikprozessor zugeführt, welcher eingerichtet ist
- alle diejenigen Ankerpunkte der Glyphe zu ermitteln, welche durch einen Kontakt von zwei zumindest abschnittsweise geradlinig verlaufenden Kanten eine Innenecke der Glyphe ausbilden;
- die Glyphe umzugestalten und somit die angepasste Glyphe zu bilden
   a) durch Versetzen von wenigstens einem der Ankerpunkte weiter in seine Innenecke hinein, wobei die Innenecke zu einer Tintenfalle ausgehöhlt wird; oder
   b) durch Einbringen eines bogenförmigen Verlaufs in die beiden sich kontaktierenden Kanten unter Beibehaltung ihres Kontakts, wobei die Innenecke zu einer Tintenfalle ausgehöhlt wird; und
- die angepasste Glyphe in eine rasterbasierte Zieldatei zu speichern, um diese anschließend drucken zu können.

Auf diese Weise lässt sich also besonders effizient eine Glyphe derart umgestalten, dass sie mit sehr kleinen Abmessungen gedruckt werden kann, wobei ihr Druckbild dann gut (maschinen-)lesbar bleibt.

Die in Verbindung mit dem erfindungsgemäßen computerimplementierten Verfahren erläuterten Vorteile, technischen Wirkungen und weiterführenden Ausgestaltungen gelten in gleicher Weise für das erfindungsgemäße Computerprogramm, welches mit Programmcode zur Durchführung aller Verfahrensschritte der vorstehend erwähnten Verfahren ausgestattet ist, wenn das Computerprogramm in einem Computer ausgeführt wird.

Im Rahmen der vorliegenden Erfindung kann das Computerprogramm auf einem Computerprogrammprodukt gespeichert vorliegen; es ist beispielsweise auf einem Träger (RAM, ROM, CD, Geräte etc.) gespeichert. Es kann aber auch im Speicher eines entfernt gelegenen Servers hinterlegt und auf dessen Prozessor ausgeführt sein, sodass ein Client/Server-System oder auch ein Cloud Computing System vorliegt. Ein Computerprogramm ist ein physikalisches, vertriebsfähiges Software-Produkt, das das Programm umfasst.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von einem Ausführungsbeispiel und dessen skizzenhafter Darstellung erläutert. Hierbei zeigen:
- Figur 1: eine Illustration des computerimplementierten Verfahrens zum Anpassen einer Glyphe, um diese in kleineren Abmessungen in Form einer angepassten Glyphe später drucktechnisch auf ein Substrat aufbringen zu können, wobei als Glyphe das Schriftzeichen "A" gewählt wurde;
- Figur 2: eine bereits angepasste Glyphe in Form des Schriftzeichens "R";
- Figur 3: eine bereits angepasste Glyphe in Form des Schriftzeichens "M";
- Figur 4: eine bereits angepasste Glyphe in Form eines Schriftzeichens "K";
- Figur 5: eine bereits angepasste Glyphe in Form eines Schriftzeichens "E";
- Figur 6: eine bereits angepasste Glyphe in Form eines Schriftzeichens "F";
- Figur 7: die Darstellung des Wortes MICROTEXT mit einem entsprechenden Detail, wobei die angepassten Glyphen noch vektorbasiert vorliegen;
- Figur 8: die Glyphen aus Figur 7, wobei diese in eine Rastergrafik umgerechnet wurden, beispielhaft mit 6400 dpi (für englisch "dots per inch") bei einer Größe von 0,2 mm; und
- Figur 9: die Glyphen aus Figur 7, wobei diese in eine Rastergrafik umgerechnet wurden, beispielhaft mit 8000 dpi (für englisch "dots per inch") bei einer Größe von 0,2 mm.

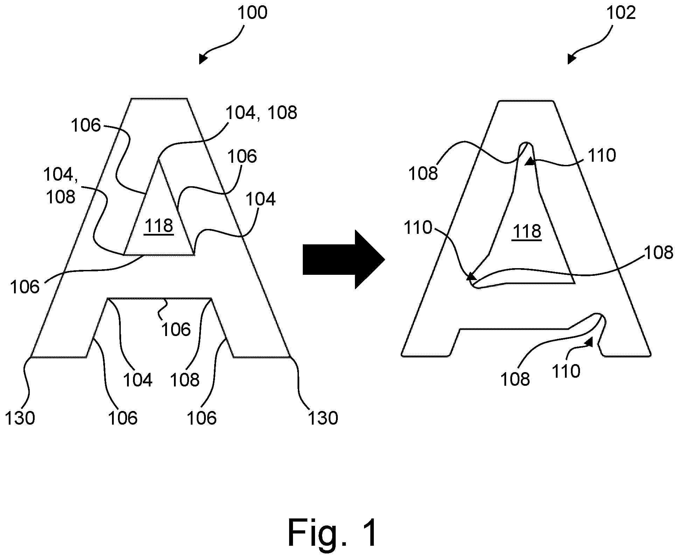

In Figur 1 wird das erfindungsgemäße computerimplementierte Verfahren zum Anpassen einer links klargestellten Glyphe 100 in Form des Buchstabens "A" illustriert. Aus dieser Glyphe 100 wird dann eine angepasste Glyphe 102 generiert, damit die Glyphe 100 später in kleineren Abmessungen drucktechnisch auf ein Substrat aufgebracht werden kann, ohne dass dabei Binnenräume 118 oder Innenecken 108 so verfüllt werden, dass die Glyphe 100 nicht mehr zu erkennen ist.

Jedenfalls wird zunächst die Glyphe 100 bereitgestellt, beispielsweise in einer Ursprungsdatei. Dann werden, insbesondere automatisiert, alle Ankerpunkte 104 der Glyphe 100 ermittelt, welche durch einen Kontakt von zwei - zumindest im Bereich ihres Kontaktpunkts - geradlinig verlaufenden Kanten 106 eine Innenecke 108 der Glyphe 100 ausbilden. Die Glyphe 100 wird sodann umgestaltet, womit die angepasste Glyphe 102 gebildet wird. Das Umgestalten erfolgt durch Versetzen von wenigstens einem der Ankerpunkte 104 weiter in seine Innenecke 108 hinein, wobei die Innenecke 108 dann zu einer Tintenfalle 110 ausgehöhlt wird; alternativ wird die Glyphe 100 umgestaltet und somit die angepasste Glyphe 102 gebildet durch ein Einbringen eines bogenförmigen Verlaufs in die beiden sich kontaktierenden Kanten 106 unter Beibehaltung ihres Kontakts, wobei die Innenecke 108 ebenfalls zu einer Tintenfalle 110 ausgehöhlt wird. Vorzugsweise liegt der versetzte Ankerpunkt 104 bei der angepassten Glyphe dann als glatter Punkt vor. Mit anderen Worten wird beim Versetzen der Ankerpunkte 104 der Verlauf der Kanten 106 zusätzlich abgerundet. Alternativ oder zusätzlich werden auch mehrere der versetzten Ankerpunkte 104 hinzugefügt, die dann eine glatte Kurve bilden; es kommen beispielsweise drei der weiteren, versetzten Ankerpunkte 104 hierfür in Betracht. Die (beiden) äußeren Ankerpunkte 104 halten dabei die Position der Innenecke 108 fest, wohingegen ein weiterer, mittlerer Ankerpunkt 104 durch die Verschiebung die Tintenfalle 110 ausbildet. Die auf diese Weise angepasste Glyphe 102 wird anschließend in eine Zieldatei gespeichert, die dann auch einem weiteren Druckprozess zugrunde gelegt werden kann.

Es ist zu erkennen, dass der Binnenraum 118 der als "A" gebildeten, angepassten Glyphe 102 hinsichtlich seines Flächeninhalts gegenüber demjenigen der unangepassten Glyphe 100 erhöht wurde. Dies erfolgt durch Versetzen einer der Kanten 106, die den Binnenraum 118 der Glyphe 100 umschließen. Vorliegend wurde die untere Kante 106 des Binnenraums 118 nach außen versetzt, sodass die horizontale Strebe des Buchstabens "A" insgesamt nach unten versetzt dargestellt ist. Dies gewährleistet, dass der Binnenraum 118 beim Drucken nicht mit Tinte vollständig verfüllt wird und somit erkennbar bleibt.

Beim Verdrucken der angepassten Glyphe 102 in kleinen Abmessungen werden die Tintenfallen 110 mit der Drucktinte verfüllt; auch der Binnenraum 118 der angepassten Glyphe 102 wird wieder teilweise wieder mit Tinte "zulaufen". Somit ähnelt also das Druckbild der verdruckten angepassten Glyphe 102 wieder der Gestaltung der ursprünglichen Glyphe 100; jedenfalls bleibt die Glyphe gut erkennbar nach ihrem Verdrucken.

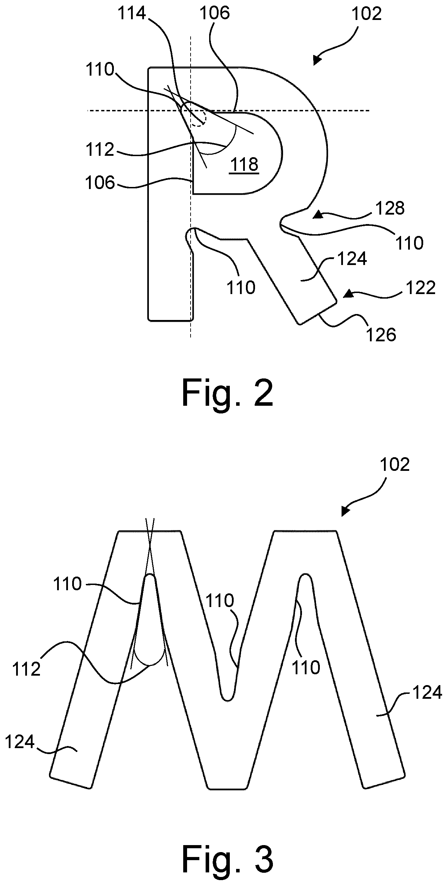

In Figur 2 ist eine weitere, bereits angepassten Glyphe 102 in Form des Buchstabens "R" gezeigt. Bei dieser Glyphe 102 ist ein Öffnungswinkel 112 skizziert, der durch die Tintenfalle 110 entsteht. Dieser Öffnungswinkel 112 in den Innenecken 108 der angepassten Glyphen 102 hängt von demjenigen Winkel 114 ab, unter welchem die in der ursprünglichen Glyphe 100 geradlinig verlaufenden Kanten 106 zueinander ausgerichtet sind. In Figur 2 ist der Verlauf der ursprünglichen geradlinig verlaufenden Kanten 106 durch eine gestrichelte Linie illustriert. Der Ankerpunkt 104 von einer Innenecke 108, deren Kanten 106 unter einem Winkel 114 von zwischen 70 Grad und 110 Grad zueinander ausgerichtet sind, wird beim Umgestalten der Glyphe 100 so versetzt, dass der Öffnungswinkel 112 der Tintenfalle 110 zwischen 35 Grad und 45 Grad beträgt. Vorliegend beträgt der Öffnungswinkel 112 exemplarisch 38,5 Grad, wobei gewährleistet ist, dass die Tintenfalle 110 der angepassten Glyphe 102 auch nach der Belichtung erhalten bleibt.

Bei der angepassten Glyphe 102 von Figur 2 ist ferner auffällig, dass die bei einer ursprünglichen Glyphe 100 vorhandenen spitzen und stumpfen Winkel zugunsten der besseren späteren Verdruckbarkeit vermieden wurden. Somit wird also ein mit einem freien Ende 122 endender Schenkel 124 der Glyphe 108 bei der angepassten Glyphe 102 mit einer senkrecht bezüglich eines Verlaufs des Schenkels 124 orientierten Abschlusskante 126 gebildet.

Bei der angepassten Glyphe 102 in Form des Buchstabens "M" gemäß Figur 3 ist zu erkennen, dass der durch die Tintenfalle 110 realisierte Öffnungswinkel 112 geringer ist als derjenige des Buchstabens "R" aus Figur 2. Hierbei ist der Ankerpunkt 104 von einer Innenecke 108, deren Kanten 106 unter einem Winkel 114 von zwischen 20 Grad und 60 Grad zueinander ausgerichtet sind, so versetzt worden, dass der Öffnungswinkel 112 zwischen 10 Grad und 30 Grad beträgt. Vorliegend beträgt der Öffnungswinkel 112 rein exemplarisch 16 Grad, womit die Tintenfallen 110 auch nach der Belichtung noch erhalten bleiben. Die Glyphe 102 der Figur 3 weist darüber hinaus eine zusätzliche Besonderheit auf: Ihre freien Schenkel 124 sind leicht abgespreizt, damit die durch sie gebildeten Freiräume geöffnet werden und nicht beim Bedrucken durch Tinte unerwünscht verfüllt werden.

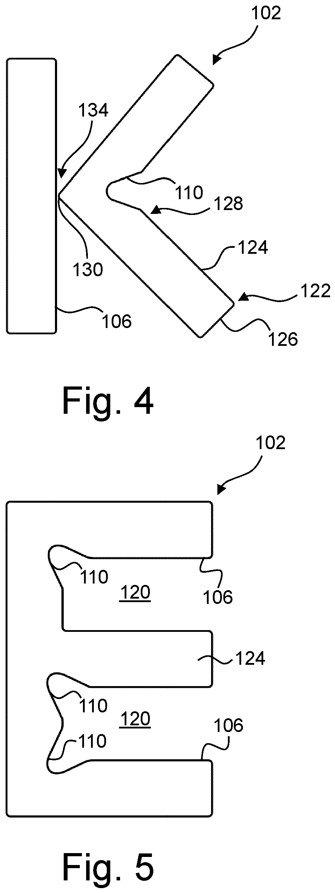

In Figur 4 ist eine weitere angepasste Glyphe 102 in Form des Buchstabens "K" dargestellt. Hierbei ist zu erkennen, dass die beiden Schenkel 124 des Buchstabens an ihrer Außenseite eine Außenecke bilden, die ebenfalls durch einen Ankerpunkt 130 realisiert ist. Diese mit dem Ankerpunkt 130 gebildete Außenecke sitzt bei der in der Ursprungsdatei enthaltenen Glyphe 100 auf der senkrecht verlaufenden Kante 106 auf. Dieser Anschluss des Ankerpunkts 130 an die vertikal verlaufende Kante 106 erfolgt geöffnet bzw. spitz, um eine Verdickung an der Kontaktstelle zu vermeiden. Vorliegend wird sogar vorgeschlagen, einen Abstand 134 zwischen der vertikal verlaufenden Kante 106 und dem Ankerpunkt 130 einzuhalten, um solche Verdickungen beim Druckvorgang zu vermeiden. Verdickungen verschlechtern das Druckbild.

In Figur 5 wird eine weitere angepasste Glyphe 102 in Form des Buchstabens "E" gezeigt. Diese umfasst einen mit einem freien Ende 122 gebildeten und sich zwischen zwei Kanten 106 erstreckenden Schenkel 124. Dieser Schenkel 124 ist an seinem dem freien Ende 122 abgewandten, gebundenen Ende 128 an höchstens einer seiner beiden Innenecken 108 mit einer Tintenfalle 110 gebildet. Dies vermeidet, dass der Schenkel 124 beim Druckvorgang zu stark ausdünnt. Außerdem ist der mittlere Schenkel 124 derart angeordnet oder versetzt worden, dass die beiden dargestellten Freiräume 120, die von drei der Kanten 106 teilumschlossen sind, gleich groß bleiben.

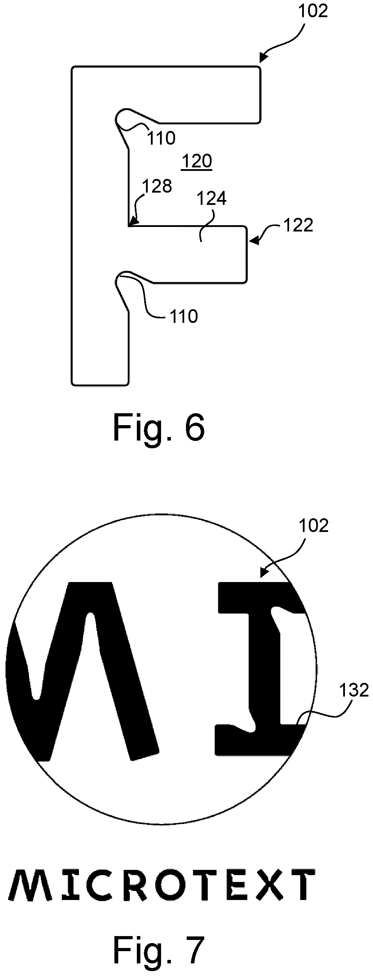

In Figur 6 wird eine weitere angepasste Glyphe 102 in Form des Buchstabens "F" gezeigt. Auch hier ist der untere der beiden Schenkel 124 nur einseitig mit einer Tintenfalle 110 gebildet. Außerdem ist der untere Schenkel 124 gegenüber der ursprünglichen Glyphe 100 etwas herabgesetzt worden, damit der Freiraum 120, der durch drei der Kanten 106 begrenzt wird, vergrößert wird. Dies öffnet also den Raum zwischen den beiden Schenkein 124.

In Figur 7 ist das Wort "MICROTEXT" mit bereits angepassten Glyphen 102 gezeigt. Darüber hinaus ist ein Detail dieses Schriftzuges im Kreis dargestellt. Die hier dargestellte Variante der angepassten Glyphen 102 ist noch vektorbasiert. Es ist zu erkennen, dass die Glyphe 102 mit Auskragungen 132 gebildet ist, was durch ein entsprechendes Versetzen der Ankerpunkte 130 an den Außenecken erfolgt ist. Mit anderen Worten ist die angepasste Glyphe 102 mit Serifen gebildet. In diesem Zuge ist es daher sinnvoll, wenn die Glyphe 100 aus der Ursprungsdatei ein serifenloses Schriftzeichen ist, das in eine angepasste Glyphe 102 in Form eines serifenbetonten Schriftzeichens umgestaltet wird. Dies verbessert die Verdruckbarkeit und auch die spätere Lesbarkeit.

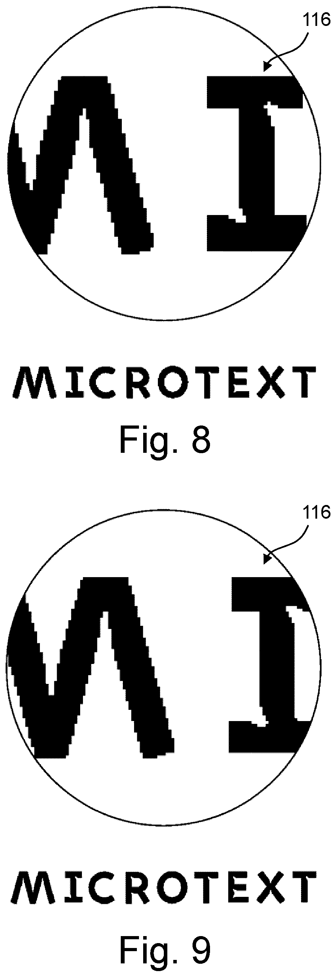

In Figur 8 ist die der Figur 7 zugrunde liegende vektorbasierte Zieldatei einem Rastergrafikprozessor (RIP) zugeführt worden, welcher die angepassten Glyphen 102 in eine Rastergrafik 116 umgerechnet hat, damit diese anschließend verdruckt werden kann. Figur 8 zeigt das Beispiel einer Umrechnung mit 6400 dpi bei einer Größe der Glyphen 102 von 0,2 mm. Es ist zu erkennen, dass die Tintenfallen 110 noch immer vorhanden sind.

In Figur 9 ist noch eine Rastergrafik 116 der Glyphen 102 aus Figur 7 gezeigt. Diese sind mit einer Auflösung von 8000 dpi bei einer Größe von 0,2 mm belichtet, wobei auch hier die Tintenfallen 110 noch klar zu erkennen sind.

Im Ergebnis sieht die Erfindung also vor, dass eine ursprüngliche Glyphe 100, die bei ihrem Verdrucken in ihrer Ursprungsform unleserlich würde, in eine angepasste Glyphe 102, insbesondere automatisiert, umgewandelt wird, um später ein gutes Druckbild beim Drucken der Glyphe 102 mit besonders kleinen Abmessungen zu erhalten. Binnenräume 118, Freiräume 122 und auch Innenecken 108 werden beim späteren Vordrucken nicht mit Tinte verfüllt, womit die Glyphe nach Ihrem Druckvorgang lesbar bleibt. Bei Außenecken, die auf Kanten 106 aufsitzen, wird zudem vermieden, dass Verdickungen im Druckbild auftreten.

### Bezugszeichenliste

- 100: Glyphe / Schriftzeichen
- 102: angepasste Glyphe / angepasstes Schriftzeichen (umgestaltet)
- 104: Ankerpunkt (Innenecke)
- 106: Kante (zur Formung der Ecke)
- 108: Innenecke
- 110: Tintenfalle
- 112: Öffnungswinkel
- 114: Winkel (zwischen zwei Kanten)
- 116: Rastergrafik
- 118: Binnenraum
- 120: Freiraum
- 122: freies Ende (des Schenkels)
- 124: Schenkel / Strich
- 126: Abschlusskante (am freien Ende des Schenkels)
- 128: gebundenes Ende (des Schenkels)
- 130: Ankerpunkt(Außenecke)
- 132: Auskragung (Serife)

## Patentansprüche

1. Computerimplementiertes Verfahren zum Anpassen einer Glyphe (100), um eine angepasste Glyphe (102) in kleinen Abmessungen später drucktechnisch auf ein Substrat aufzubringen, umfassend die Schritte:
- Bereitstellen einer Ursprungsdatei, die die Glyphe (100) enthält;
- Ermitteln von allen Ankerpunkten (104) der Glyphe (100), welche durch einen Kontakt von zwei zumindest abschnittsweise geradlinig verlaufenden Kanten (106) eine Innenecke (108) der Glyphe (100) ausbilden;
- Umgestalten der Glyphe (100) und somit Bilden der angepassten Glyphe (102)
a) durch Versetzen von wenigstens einem der Ankerpunkte (104) weiter in seine Ecke (108) hinein, wobei die Innenecke (108) zu einer Tintenfalle (110) ausgehöhlt wird; oder
b) durch Einbringen eines bogenförmigen Verlaufs in die beiden sich kontaktierenden Kanten (106) unter Beibehaltung ihres Kontakts, wobei die Innenecke (108) zu einer Tintenfalle (110) ausgehöhlt wird; und
- Speichern der angepassten Glyphe (102) in eine Zieldatei.

2. Computerimplementiertes Verfahren nach Anspruch 1, **dadurch gekennzeichnet, dass** der Ankerpunkt (104) so versetzt wird, dass seine zugehörige Innenecke (108) einen Öffnungswinkel (112) von zwischen 10 Grad und 45 Grad bereitstellt.

3. Computerimplementiertes Verfahren nach Anspruch 2, **dadurch gekennzeichnet, dass** der Ankerpunkt (104) von einer Innenecke (108), deren Kanten (106) unter einem Winkel (114) von zwischen 70 Grad und 110 Grad zueinander ausgerichtet sind, so versetzt wird, dass der Öffnungswinkel (112) zwischen 35 und 45 Grad beträgt.

4. Computerimplementiertes Verfahren nach einem der Ansprüche 1 bis 3, **dadurch gekennzeichnet, dass** der Ankerpunkt (104) von einer Innenecke (108), deren Kanten (106) unter einem Winkel (114) von zwischen 20 Grad und 60 Grad zueinander ausgerichtet sind, so versetzt wird, dass der Öffnungswinkel (112) zwischen 10 Grad und 20 Grad beträgt.

5. Computerimplementiertes Verfahren nach einem der Ansprüche 2 bis 4, **dadurch gekennzeichnet, dass** der Öffnungswinkel (112) asymmetrisch in die Innenecke (108) eingebracht wird.

6. Computerimplementiertes Verfahren nach einem der Ansprüche 1 bis 5, **dadurch gekennzeichnet, dass** im Falle einer Außenecke, die an einer der Kanten (106) der Glyphe (100) anliegt, ein Ankerpunkt (130) dieser Außenecke so versetzt wird, dass der Ankerpunkt (130) einen, insbesondere in Abhängigkeit der späteren Abmessungen des Drucks vorgegebenen Abstand von der Kante (106) einnimmt.

7. Computerimplementiertes Verfahren nach einem der Ansprüche 1 bis 6, **dadurch gekennzeichnet, dass**, im Falle einer Glyphe (100) mit einem von Kanten (106) umschlossenen Binnenraum (118), mindestens eine der Kanten (106) derart versetzt wird, dass sich der Flächeninhalt des Binnenraums (118) erhöht.

8. Computerimplementiertes Verfahren nach einem der Ansprüche 1 bis 7, **dadurch gekennzeichnet, dass**, im Falle einer Glyphe (100) mit einem von Kanten (106) nur teilweise umschlossenen Freiraum (120), eine der Kanten (106) derart versetzt wird, dass sich der Flächeninhalt des nur teilweise umschlossenen Freiraums (120) erhöht.

9. Computerimplementiertes Verfahren nach einem der Ansprüche 1 bis 8, **dadurch gekennzeichnet, dass**, im Falle einer Glyphe (100) mit einem ein freies Ende (122) aufweisenden und sich zwischen zwei Kanten (106) erstreckenden Schenkel (124), an seinem dem freien Ende (122) abgewandten, gebundenen Ende (128) an höchstens einer seiner beider Innenecken (108) mit einer Tintenfalle (110) gebildet wird.

10. Computerimplementiertes Verfahren nach einem der Ansprüche 1 bis 9, **dadurch gekennzeichnet, dass** ein mit einem freien Ende (122) endender Schenkel (124) der Glyphe (100) mit einer senkrecht bezüglich eines Verlaufs des Schenkels (124) orientierten Abschlusskante (126) abschließt.

11. Computerimplementiertes Verfahren nach einem der Ansprüche 1 bis 10, **dadurch gekennzeichnet, dass** auch die Ankerpunkte (130) an einem freien Schenkel (124) der Glyphe (100) ermittelt werden, die eine Außenecke ausbilden, und dass diese Ankerpunkte (130) des freien Schenkels (124) derart versetzt werden, dass ein freies Ende (122) des Schenkels (124) mit mindestens einer Auskragung (132) gebildet wird.

12. Computerimplementiertes Verfahren nach einem der Ansprüche 1 bis 11, **dadurch gekennzeichnet, dass** die Glyphe (100) aus der Ursprungsdatei ein serifenloses Schriftzeichen ist, welches in eine angepasste Glyphe (102) in Form eines serifenbetonten Schriftzeichens umgestaltet wird.

13. Computerimplementiertes Verfahren nach einem der Ansprüche 1 bis 12, **dadurch gekennzeichnet, dass** die vektorbasierte Zieldatei einem Rastergrafikprozessor (RIP) zugeführt wird, welcher zumindest die angepasste Glyphe (102) in eine Rastergrafik (116) umrechnet, um diese anschließend drucken zu können.

14. Computerimplementiertes Verfahren nach einem der Ansprüche 1 bis 12, **dadurch gekennzeichnet, dass** die bereitgestellte vektorbasierte Ursprungsdatei einem Rastergrafikprozessor (RIP) zugeführt wird, welcher eingerichtet ist:
- alle diejenigen Ankerpunkte (104) der Glyphe (100) zu ermitteln, welche durch einen Kontakt von zwei geradlinig verlaufenden Kanten (106) eine Innenecke (104) der Glyphe (100) ausbilden;
- die Glyphe (100) umzugestalten und somit die angepasste Glyphe (102) zu bilden
a) durch Versetzen von wenigstens einem der Ankerpunkte (104) weiter in seine Innenecke (108) hinein, wobei die Innenecke (108) zu einer Tintenfalle (110) ausgehöhlt wird; oder
b) durch Einbringen eines bogenförmigen Verlaufs in die beiden sich kontaktierenden Kanten (106) unter Beibehaltung ihres Kontakts, wobei die Innenecke (108) zu einer Tintenfalle (110) ausgehöhlt wird; und
- die angepasste Glyphe (102) in eine rasterbasierte Zieldatei zu speichern, um diese anschließend drucken zu können.

15. Computerprogramm mit Programmcode zur Durchführung aller Verfahrensschritte nach einem der Ansprüche 1 bis 14, wenn das Computerprogramm in einem Computer ausgeführt wird.
